**Europäisches Patentamt**

**European Patent Office**

**Office européen des brevets**

(11) Veröffentlichungsnummer: **0 436 827 A1**

## (12) EUROPÄISCHE PATENTANMELDUNG

(21) Anmeldenummer: 90123069.8

(22) Anmeldetag: 03.12.90

(51) Int. Cl.5: **H01M 10/50, H01M 2/10, B65D 81/38**

(30) Priorität: 08.12.89 DE 3940649

(43) Veröffentlichungstag der Anmeldung:
**17.07.91 Patentblatt 91/29**

(84) Benannte Vertragsstaaten:
**CH DE ES FR GB IT LI NL**

(71) Anmelder: **Asea Brown Boveri Aktiengesellschaft Kallstadter Strasse 1 W-6800 Mannheim 31(DE)**

(72) Erfinder: **Schulz, Klaus-Peter Kühler Grund 19 W-6900 Heidelberg(DE)**
Erfinder: **Heidtmann, Uwe Bunsenstrasse 4 W-6907 Nussloch(DE)**
Erfinder: **Eschenbach, Horst Hahnfeldstrasse 5 W-6935 Waldbrunn 1(DE)**

(74) Vertreter: **Rupprecht, Klaus, Dipl.-Ing. et al c/o Asea Brown Boveri Aktiengesellschaft Zentralbereich Patente Postfach 100351 W-6800 Mannheim 1(DE)**

(54) **Wärmeisolationseinrichtung.**

(57) Bei Wärmeisolationseinrichtungen, welche aus einem Formteil aus Wärmeisoliermaterial und einem dieses umgebende Metallgehäuse bestehen, erfordert ein Evakuieren der Wärmeisolationseinrichtung mit Hilfe einer Vakuumpumpe eine relativ lange Pumpdauer. Mit der Erfindung wird vorgeschlagen, zur Verringerung des Saugwiderstandes im Formteil (1,11) rillenförmige Vertiefungen (5,55) vorzusehen, welche zusammen mit der Wand des Metallgehäuses (2,22) Saugkanäle (6,66) bilden. Solche Vakuum-Wärmeisolationseinrichtungen werden beispielsweise zur Wärmeisolierung von Hochtemperaturbatterien eingesetzt.

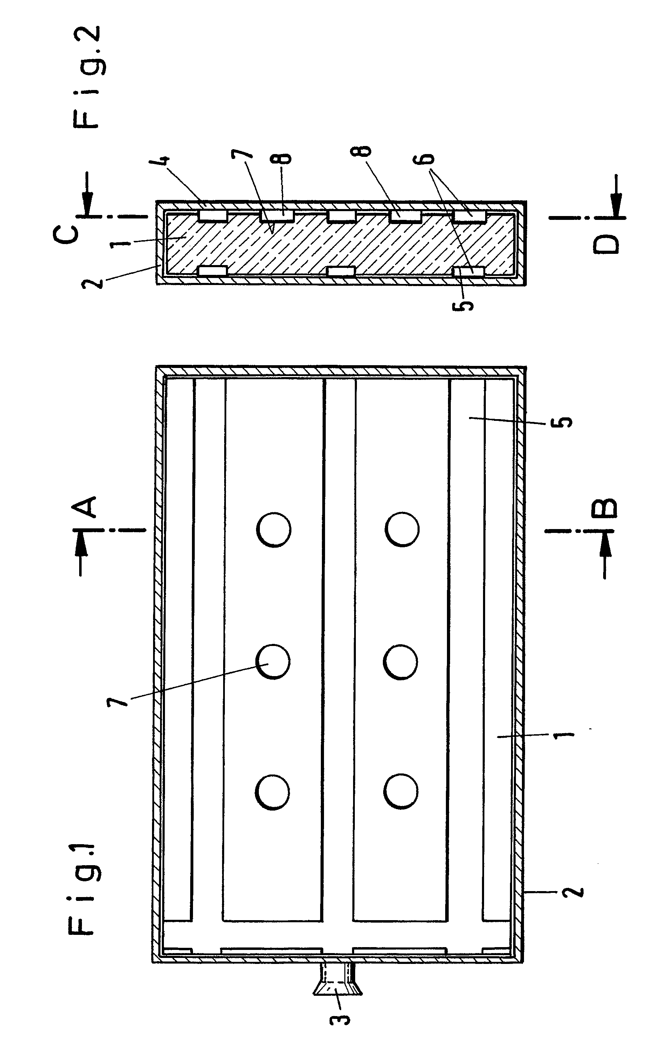

Signifikante Figur: Figur 1 in Verbindung mit Figur 2.

EP 0 436 827 A1

# WÄRMEISOLATIONSEINRICHTUNG

Die Erfindung bezieht sich auf eine Wärmeisolationseinrichtung, welche auch als Vakuumisolation bekannt ist. Eine solche Wärmeisolationseinrichtung kann aus einem doppelwandigen, gasdichten, z.B. quaderförmigen Metallgehäuse bestehen, dessen Zwischenraum mit einem porösen Wärmeisolationsmaterial ausgefüllt ist und welches evakuiert ist. Die Wärmeisolationseinrichtung kann aber nach dem gleichen Prinzip auch als wärmedämmende Platte ausgeführt sein oder eine beliebige andere Form haben.

Solche Wärmeisolationseinrichtungen werden beispielsweise als Gehäuse für Hochtemperaturbatterien verwendet. Im Fall einer Natrium-Schwefelbatterie sind beispielsweise Batteriezellen, die bei etwa 300° C arbeiten, gegen die Umgebungstemperatur thermisch zu isolieren.

Ein solches als Wärmeisolationseinrichtung ausgeführtes doppelwandiges Gehäuse besteht aus einem Innengehäuse und einem Außengehäuse aus relativ dünnen Blechen, welche im evakuierten Zustand aufgrund des außenwirkenden Luftdruckes druckbelastet werden. Um zu verhindern, daß ein direkter Wärmestrahlungsaustausch zwischen Innenwand und Außenwand stattfindet und auch zur generellen Abstützung des Innengehäuses gegenüber dem Außengehäuse, ist eine geeignete Abstützeinrichtung erforderlich. Dies kann zweckmäßig durch Einsatz eines Formteils aus Wärmeisolationsmaterial geschehen, das beispielsweise aus Keramik- oder aus Glasfasern bestehen kann. Zur Verbesserung der Isolationswirkung werden am Schluß der Fertigstellung der Wärmeisolationseinrichtung mit Hilfe einer Vakuumpumpe aus dem Zwischenraum zwischen dem inneren und äußeren Gehäuse die vorhandenen Gase abgesaugt.

Der Evakuierungsvorgang dauert lange, nämlich mehrere Stunden, abhängig von den Gehäusedimensionen, weil das Isoliermaterial einen großen Saugwiderstand darstellt. Der Erfindung liegt daher die Aufgabe zugrunde, eine Wärmeisolationseinrichtung mit Vakuumisolation anzugeben, welche sich in kürzerer Zeit evakuieren läßt.

Diese Aufgabe wird durch eine Wärmeisolationseinrichtung, bestehend aus einem vakuumdichten Metallgehäuse, welches ein Formteil aus Wärmeisoliermaterial umschließt, gelöst, wobei das Formteil an seiner Oberfläche rillenförmige Vertiefungen aufweist, welche in Verbindung mit der Wand des Metallgehäuses Saugkanäle für einen erleichterten Transport von Gasen während eines Evakuierungsvorganges bilden.

Die erfindungsgemäße Lösung hat den Vorteil, daß keine zusätzlichen Bauteile benötigt werden.

In vorausgegangenen Versuchen, den Saugwiderstand der Anordnung zu verringern, wurde ein Netzgebilde zwischen einem Formteil aus Wärmeisoliermaterial und der Geäusewand eingefügt. Damit sollte ein Abstand des Wärmeisoliermaterials von der Wand gewährleistet sein und dadurch der Saugwiderstand verringert werden. Der Erfolg dieser Maßnahme war jedoch nicht befriedigend, da sich das Netz weitgehend in das Formteil eindrückte und somit praktisch kein Saugquerschnitt zur Verfügung stand. Die Kosten für das Netz und seine Montage waren relativ hoch.

Mit der erfindungsgemäßen Ausführung des Formteils wurde dagegen eine deutliche Verringerung, z.B. Halbierung der Evakuierungsdauer erzielt und außerdem - im Vergleich zu einer Ausführung mit Netz oder anderen Einsatzteilen - Material und Montagearbeit eingespart.

Außer kanalförmigen Aussparungen können nach einer vorteilhaften Ausgestaltung auch taschenförmige Aussparungen im wärmeisolierenden Formteil vorgesehen werden, welche Zusatzmaterialien, z.B. Gettermaterial, aufnehmen können.

Eine genauere Beschreibung der Erfindung erfolgt anhand von in der Zeichnung dargestellten Ausführungsbeispielen. Ein erstes Ausführungsbeispiel bezieht sich auf eine Wärmeisolationseinrichtung, welche als ein wärmeisolierendes Wandelement ausgeführt ist. Figur 1 zeigt einen Blick auf ein solches Wandelement, dessen Metallwand auf der betriebsmäßig heißen Seite entfernt wurde und Figur 2 einen Schnitt durch das gesamte Wandelement.

Die in den Figuren 1 und 2 dargestellten Schnittbilder zeigen ein Wärmeisolationselement, das aus einem Formteil 1 aus Wärmeisoliermaterial und einem Metallgehäuse 2 besteht, welches das Formteil 1 allseitig umgibt. Das Metallgehäuse 2 weist einen Saugflansch 3 für den Anschluß einer Vakuumpumpe auf. Eine mit dem Bezugszeichen 4 versehene Wandseite des Wärmeisolationselements ist die betriebsmäßig als heiße Seite vorgesehene Seite.

Figur 2 zeigt einen Schnitt durch eine in Figur 1 eingetragene Ebene A-B. Figur 1 zeigt einen Schnitt durch eine in Figur 2 angegebene Ebene C-D.

Das Formteil 1 kann beispielsweise aus Keramik oder Glasfaser hergestellt sein. Es weist rillenförmige Vertiefungen 5 auf, welche zusammen mit der Wand des Metallgehäuses 2 Saugkanäle 6 bilden, welche zu dem Saugflansch 3 führen. Die optimale Breite und Tiefe der Vertiefungen 5 und damit auch der Saugkanäle 6 hängt von der Wandstärke und dem Material des Metallgehäuses 2 ab. Beispielsweise ist für ein Metallgehäuse 2 aus 0,8 mm dickem Edelstahlblech ein Verhältnis von Kanaltiefe zu Kanalbreite bis zu 1 : 20 günstig, wobei die Kanaltiefe 1,5 mm nicht überschreiten sollte. Außerdem sollte der gesamte Kanalquerschnitt, also die Summe der Querschnitte der einzelnen Saugkanäle 6, eine Fläche von 650mm² nicht überschreiten, bezogen auf 1 m Breite der Wärmeisolationseinrichtung und 1 m für die größte Distanz zwischen Saugstutzen und entferntester Stelle der Isolationseinrichtung (Transportweg für Gasmoleküle).

Die Saugkanäle 6 verringern den Saugwiderstand der Anordnung wesentlich, da beim Evakuieren abzuführende Gase nur kurze Strecken innerhalb des Materials des Formteils 1 zurücklegen müssen bis ein Saugkanal 6 erreicht ist, durch welchen die Gase gesammelt abgeführt werden.

Nach einer vorteilhaften Ausgestaltung weist das Formteil 1 außerdem lokale Vertiefungen 7 auf, welche zusammen mit dem Gehäuse 2 Kammern 8 bilden. Die Kammern 8 sind auf der heißen Wandseite 4 angeordnet und sind zur Aufnahme von Gettermaterial vorgesehen. Solches Gettermaterial wird zum Binden von Gasen, mit Ausnahme von Edelgasen und $H_2O$, eingesetzt und kann mit Hilfe der auch als Taschen bezeichneten Kammern 8 flächenmäßig verteilt angeordnet werden.

Die rillenförmigen Vertiefungen 5 und lokalen Vertiefungen 7 am Formkörper 1 lassen sich sehr einfach bei der Formgebung des Wärmeisoliermaterials herstellen. Die Vertiefungen 5, 7 sollen allerdings nur in einem solchen Umfang vorgesehen werden, daß sich der Wärmewiderstand des Wärmeisolationselements nicht wesentlich verändert.

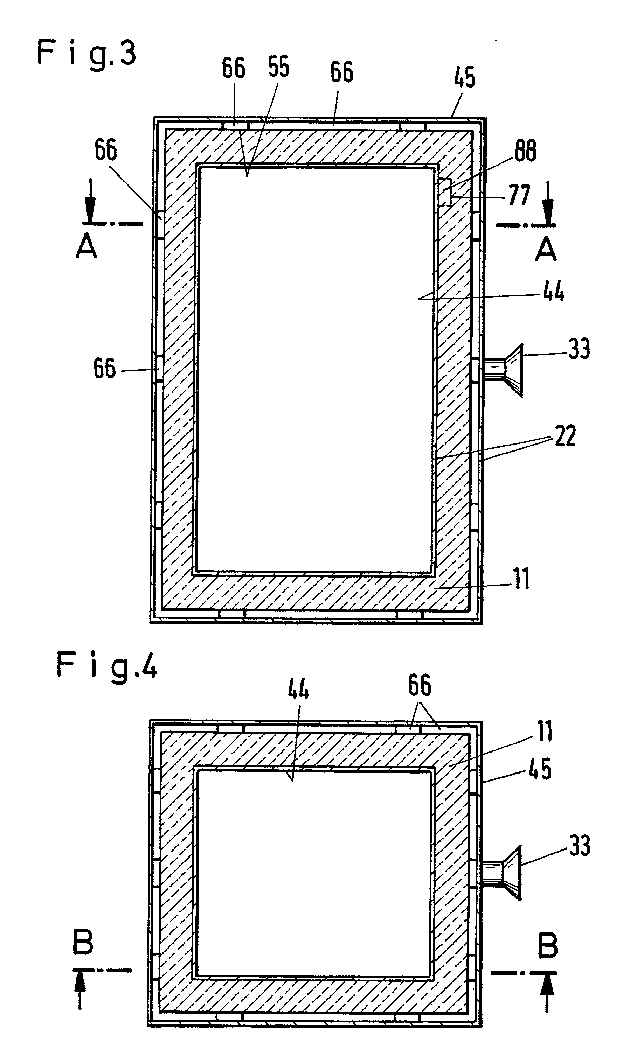

Ein zweites Ausführungsbeispiel ist in den Fig. 3 und 4 dargestellt, welche Schnitte durch eine als quaderförmiges Gehäuse ausgeführte Wärmeisolationseinrichtung zeigen. Ein solches Gehäuse könnte beispielsweise eine Hochtemperaturbatterie umschließen.

Fig. 3 zeigt einen Schnitt durch eine in Fig. 4 eingetragene Ebene B-B. Aus der Darstellung ist ein inneres Gehäuse 44 und ein äußeres Gehäuse 45 zu erkennen, welche zusammen ein Metallgehäuse 22 bilden, in welches ein Formteil 11 eingebettet ist. Das äußere Gehäuse 45 weist einen Saugflansch 33 auf. Das wärmeisolierende Formteil 11 hat auf seiner dem äußeren Gehäuse 45 zugewandten Seite sich kreuzende Saugkanäle 66. Bei der Betrachtung des Formteils 11 ist zu beachten, daß der Schnitt B-B durch einen Saugkanal 66 gelegt ist. Mit gestrichelten Linien ist angedeutet, daß auf der dem inneren Gehäuse 44 zugewandten Seite des Formteils 11 lokale Vertiefungen 77 vorhanden sein können, welche zusammen mit dem inneren Gehäuse 44 Kammern 88 bilden zur Aufnahme von Gettermaterial.

Fig. 4 zeigt einen Schnitt durch eine in Fig. 3 eingetragene Ebene A-A, ebenfalls ein Schnitt durch eine Stelle, an der ein Saugkanal 66 vorhanden ist.

## Patentansprüche

1. Wärmeisolationseinrichtung, bestehend aus einem vakuumdichten Metallgehäuse, welches ein Formteil aus Wärmeisoliermaterial umschließt, wobei die Wärmeisolationseinrichtung z.B. plattenförmig oder vorzugsweise als doppelwandiges, z.B. quaderförmiges Gehäuse ausgeführt sein kann, dadurch gekennzeichnet, daß das Formteil (1,11) an seiner Oberfläche rillenförmige Vertiefungen (5,55) aufweist, welche in Verbindung mit der Wand des Metallgehäuses (2,22) Saugkanäle (6ˋ66) für einen erleichterten Transport von Gasen während eines Evakuierungsvorganges bilden.

2. Wärmeisolationseinrichtung nach Anspruch 1, dadurch gekennzeichnet, daß das Formteil (1,11) außerdem auf einer der Gehäusewand mit der betriebsmäßig höheren Temperatur zugewandten Seite (4,44) lokale Vertiefungen (7,77) aufweist, welche in Verbindung mit der Gehäusewand Kammern (8,88) zur Aufnahme von Gettermaterial bilden, wobei die Tiefe der Kammern vorzugsweise so gewählt ist, daß das z.B. als Tablette geformte Gettermaterial an die heiße Wand angedrückt wird.

3. Wärmeisolationseinrichtung nach Anspruch 1 oder 2, dadurch gekennzeichnet, daß das Metallgehäuse (2,22) aus etwa 0,8 mm dickem Edelstahlblech hergestellt ist und die Saugkanäle (6,66) ein Verhältnis von Kanaltiefe zu Kanalbreite von bis zu 1 : 20 bei einer maximalen Kanaltiefe von 1,5 mm aufweisen.

Fig.1

Fig.2

EP 0 436 827 A1

# Fig.3

# Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| Y | FR-E-6 616 0   (CO. FRANCAISE THOMSON-HOUSTON)<br>* Seite 1, rechte Spalte, lezter Absatz - Seite 2, linke Spalte, letzer Absatz * <br>- - - | 1,2 | H 01<br>M 10/50<br>H 01 M 2/10<br>B 65 D 81/38<br>A 47 J 41/02 |
| Y | GB-A-2 089 966   (BROWN BOVERI & CIE)<br>* Insgesamt *<br>- - - | 1 | |
| Y | US-A-3 864 170   (F.C. KRIEGER)<br>* Spalte 2, Zeile 26 - Spalte 3, Zeile 68 *<br>- - - | 2 | |
| A | FR-A-2 443 747   (THE SOUTH AFRICAN INVENTIONS DEVELOPMENT CORP.)<br>* Seite 4, Zeile 35 - Seite 7, Zeile 14 *<br>- - - | 1,2 | |
| A | FR-A-2 074 353   (VARTA GmbH)<br>* Seite 5 - Seite 8, Zeile 13 *<br>- - - | 1,3 | |
| A | DE-A-1 671 489   (TELEFUNKEN PATENTVERWER-TUNGSGESELLSCHAFT)<br>* Seite 5, letzter Absatz - Seite 6, letzter Absatz *<br>- - - - - | 1 | RECHERCHIERTE SACHGEBIETE (Int. Cl.5)<br><br>H 01 M<br>B 65 D 81/38<br>A 47 J 41/02<br>E 04 B 1/80 |

Der vorliegende Recherchenbericht wurde für alle Patentansprüche erstellt

| Recherchenort | Abschlußdatum der Recherche | Prüfer |
| --- | --- | --- |
| Den Haag | 11 April 91 | DE VOS L.A.R. |